# EUROPÄISCHE PATENTSCHRIFT

(11) **EP 2 818 238 B1**
(45) Veröffentlichungstag und Bekanntmachung des Hinweises auf die Patenterteilung: **07.03.2018**
(21) Anmeldenummer: 14174857.4
(22) Anmeldetag: 27.06.2014
(51) Int. Cl.: B01J 4/00, B01J 19/00

(54) **Verfahren zur thermischen Umsetzung eines Stoffgemisches in einem Reaktorraum zu Partikeln**
Method for thermal conversion of a substance mixture into particles in a reactor chamber
Procédé destiné à la conversion thermique d'un mélange de matières en particules dans un compartiment de réacteur

(30) Priorität: 28.06.2013 DE 102013106837
(43) Veröffentlichungstag der Anmeldung: 31.12.2014
(73) Patentinhaber: JENOPTIK Automatisierungstechnik GmbH, 07745 Jena (DE)
(72) Erfinder: Krippendorf, Ronald, 07743 Jena (DE); Krech, Thomas, 99096 Erfurt (DE)
(74) Vertreter: Schaller, Renate

(56) Entgegenhaltungen:
- WO-A1-00/78672
- US-A1- 2003 013 606
- US-A1- 2006 162 497
- US-A1- 2006 248 982

## Beschreibung

Die Erfindung betrifft ein Verfahren zur Herstellung von katalytisch wirksamen Partikeln. Die Beschreibung betrifft weiterhin eine Vorrichtung zur Durchführung des Verfahrens, wie diese gattungsgemäß aus der US 2009/0325792 A1 bekannt sind. Aus dem Stand der Technik sind eine Reihe von Verfahren bekannt, mit denen kleine Partikel herstellbar sind, indem mindestens ein Ausgangsstoff der Partikel in einer Lösung, Suspension oder Dispersion aufgenommen, fein verteilt und durch Wärmeeinwirkung thermisch umgesetzt wird.

Eine thermische Umsetzung kann eine Oxidation oder eine Reduktion des Ausgangsstoffs beinhalten. Sind mehrere Ausgangsstoffe in dem Stoffgemisch vorhanden, können sowohl Oxidationen als auch Reduktionen ablaufen. Eine thermische Umsetzung kann sowohl durch eine Zersetzung als auch durch eine chemische Reaktion mindestens eines Ausgangsstoffs erreicht sein.

Sollen die Partikel als Ausgangsstoffe von Keramiken und Leuchtstoffen (z. B. WO 2006/076964 A2, DE 43 07 333 A1, WO 00/78672 A1), als Beschichtungs- oder Poliermaterial (z. B. EP 1 142 830 A1, EP 0 623 101 B1) Verwendung finden, sind gleichmäßige, kompakte Formen und Dimensionen der Partikel, sowie geringe Defektraten günstig.

Für eine Verwendung als Katalysatoren sind dagegen hohe spezifische Oberflächen und Defekte in dem strukturellen Aufbau (z. B. Gitterfehler) günstig.

Es sind aus dem Stand der Technik verschiedene Verfahren zur Herstellung von Partikeln bekannt. So ist durch die US 2006/0162497 A1 ein Verfahren zur Herstellung von Nanopartikeln offenbart, bei dem ein Gemisch eines Ausgangsstoffs und eines flüssigen Bestandteils in eine Flamme oder einen direkt durch wenigstens eine Flamme geheizten Bereich eingesprüht und der Ausgangsstoff zu den Nanopartikeln umgesetzt wird. Dabei wird das Gemisch in einer ersten Reaktionszone eines Reaktorraums direkt mit der Flamme in Kontakt gebracht oder in einen Abgasstrahl der Flamme eingeleitet. Der Ausgangstoff wird infolge der Wärmeeinwirkung in die gasförmige Phase überführt. Infolge von Nukleationsvorgängen wird die Umsetzung des gasförmigen Ausgangsstoffs begonnen. Die Umsetzung des Ausgangsstoffs wird abgeschlossen, wenn der Ausgangsstoff durch eine zweite Reaktionszone des Reaktorraums geleitet wird. Um den durch die Flamme auftretenden Sauerstoffmangel auszugleichen, können Hilfsgase wie Sauerstoff oder sauerstoffhaltige Gase bzw. Gase mit Oxidationsmitteln in den Reaktorraum zugeführt werden. Es kann nach der ersten oder nach der zweiten Reaktionszone eine Kühlzone angeordnet sein, in der durch ein eingeleitetes Kühlmedium die Form der Flamme beeinflusst werden kann und die entstehenden Nanopartikel so stark abgekühlt werden können, dass deren momentane Kristallstruktur erhalten bleibt.

Durch die US 2006/0248982 A1 ist ebenfalls ein Verfahren zur Herstellung von Nanopartikeln offenbart, bei dem ein metallhaltiger Ausgangsstoff in einem Reaktorraum unter Wärmezufuhr verdampft wird. Zur Wärmezufuhr werden Flammen, Lichtbögen, Plasmen oder Kombinationen aus diesen Energiequellen benutzt. In jeder offenbarten Ausgestaltung der Erfindung gemäß der US 2006/0248982 A1 kommt der Ausgangsstoff mit der reduzierend wirkenden Energiequelle in direkten Kontakt und wird in einen Dampf überführt. Auch hier wird Sauerstoff zugeführt, um die reduzierende Wirkung der Energiequelle zu kompensieren.

Durch die US 2003/0013606 A1 sind eine Pulvermischung aus zwei Bestandteilen sowie ein Verfahren zur Herstellung der Pulvermischung beschrieben. Die Reaktion eines Aerosols der zwei Bestandteile kann in einem Reaktorraum erfolgen, der als Heißwandreaktor ausgebildet ist. Die Verweilzeit in dem heißen Reaktorraum soll wenigstens 0,2 Sekunden betragen, wobei ausdrücklich darauf hingewiesen ist, dass darauf zu achten ist, dass die Verweilzeit hinreichend lang ist, um eine ausreichende Erhitzung der Partikel in dem Aerosol zu gewährleisten. Bei einer Herstellung der Partikel der Pulvermischung mittels eines Heißwandreaktors ist auf die Erhaltung einer laminaren Strömung des Aerosols durch den Reaktorraum zu achten. Eine alternative Möglichkeit zur Herstellung besteht in der Nutzung des Verfahrens des Sprühtrocknens, bei dem ein Heißgasstrom in den Reaktorraum eingeleitet und mit dem Eduktstrom gemischt wird. Dabei sind Verweildauern des Aerosols bzw. der sich entwickelnden Partikel in dem Reaktorraum von wenigstens zehn Sekunden erforderlich.

Aus der US 2009/0325792 A1 ist ein Verfahren zur Herstellung eines Pulverbatches mit Partikeln unterschiedlicher Eigenschaften bekannt, bei dem ein Stoffgemisch mit mindestens einem Ausgangsstoff eines Partikels und einem flüssigen Lösungsmittel bereitgestellt wird. Das Stoffgemisch wird in einen Nebel überführt und in einem Heißgasstrom (nachfolgend: Reaktionsstrom) erhitzt. Dabei wird mindestens ein Teil des Lösungsmittels entfernt und der Ausgangsstoff thermisch umgesetzt. Die Reaktionsdauer des Verfahrens beträgt etwa 30 Sekunden, wobei diese Zeitangabe noch nicht das Abkühlen der hergestellten Partikel beinhaltet.

Zur Durchführung des Verfahrens ist in der US 2009/0325792 A1 ein zylinderförmiger Reaktor offenbart, in den der Nebel mittels eines Trägergases eingesprüht wird. Eine Heizung erhitzt den Reaktor auf bis zu 1500 Grad C. Um eine schnelle Abkühlung der hergestellten Partikel zu erreichen, kann ein Kühlmedium zugeführt werden (quenching). Die Reaktionsdauern bis zum Abkühlen liegen bei weniger als 60 bis weniger als 30 Sekunden.

Eine hohe Reaktivität der gemäß der US 2009/0325792 A1 hergestellten Partikel ist erst durch eine Kombination von Materialien unterschiedlicher Eigenschaften sichergestellt. So ist eines der Materialien gut geeignet, Sauerstoff aufzunehmen oder abzugeben.

Der Erfindung liegt die Aufgabe zugrunde, eine weitere Möglichkeit zur thermischen Umsetzung eines Stoffgemisches zu reaktiven Partikeln in einem Reaktorraum aufzuzeigen.

Die Aufgabe wird durch die Gegenstände des Anspruchs 1 gelöst. Vorteilhafte Weiterbildungen finden sich in den abhängigen Ansprüchen.

Die Aufgabe wird in einem Verfahren zur thermischen Umsetzung eines Stoffgemisches in einem Reaktorraum zu Partikeln mit den nachfolgend aufgeführten Schritten gelöst.

Es wird das Stoffgemisch in Form einer Lösung, einer Suspension, einer Dispersion oder einer Emulsion mindestens eines Ausgangsstoffs der Partikel bereitgestellt. Anschließend erfolgt ein Erzeugen eines Nebels aus Tröpfchen des Stoffgemisches in mindestens einem Trägergas, gefolgt von einem Einleiten des Nebels mittels eines Trägergasstroms in den Reaktorraum als einen Eduktstrom. Es wird zudem ein Heißgasstrom in den Reaktorraum eingeleitet und der Eduktstrom und der Heißgasstrom zum Erhitzen des Eduktstroms, insbesondere der Tröpfchen, mindestens auf eine zur thermischen Umsetzung des mindestens einen Ausgangsstoffs erforderliche Starttemperatur miteinander gemischt. Der nächste Schritt ist ein Durchleiten des Eduktstroms und des Heißgasstroms als ein eine Strömungsgeschwindigkeit aufweisender Reaktionsstrom entlang einer durch den Reaktorraum gerichteten Reaktionsstrecke mit einem Streckenanfang und einem Streckenende, wobei der Streckenanfang der Reaktionsstrecke durch den Ort des Mischens des Heißgasstroms mit dem Eduktstrom gegeben ist. Weiterhin erfolgt ein Zuführen eines Kühlstroms in den Reaktorraum und Mischen des Kühlstroms mit dem Reaktionsstrom zum Abkühlen des Reaktionsstroms über eine Abkühldauer auf eine Zieltemperatur, wobei das Streckenende der Reaktionsstrecke durch den Ort gegeben ist, an dem die Zieltemperatur erreicht wird, und nachfolgend ein Sammeln der hergestellten Partikel. Ein erfindungsgemäßes Verfahren ist dadurch gekennzeichnet, dass der Heißgasstrom in einer der Zuführung des Heißgasstroms zum Streckenanfang dienenden Heißgaszuführung indirekt erhitzt wird, dass der Reaktionsstrom kontinuierlich entlang der Reaktionsstrecke geleitet wird und dass die Strömungsgeschwindigkeit so eingestellt ist, dass der Reaktionsstrom innerhalb einer vorbestimmten Reaktionsdauer, die längstens mit 2 Sekunden gewählt wird, entlang der Reaktionsstrecke geleitet wird, sodass das Erhitzen des Eduktstroms, die thermische Umsetzung des mindestens einen Ausgangsstoffs zu den Partikeln und die Abkühlung der Partikel auf die Zieltemperatur innerhalb der Reaktionsdauer erfolgen.

Vorzugsweise ist die Reaktionsdauer kleiner oder gleich 1 Sekunde gewählt, bevorzugter kleiner oder gleich 500 ms, noch bevorzugter kleiner oder gleich 300 ms. Besonders günstig sind Ausgestaltungen des erfindungsgemäßen Verfahrens, bei denen die Reaktionsdauern kleiner oder gleich 200 ms, besser noch kleiner oder gleich 100 ms gewählt sind. Reaktionsdauern kleiner oder gleich 100 ms sind insbesondere für eine Herstellung katalytisch wirksamer Partikel von Bedeutung. Die Reaktionsdauer ist gegeben durch die zeitliche Ausdehnung der Reaktion und beginnt mit der Verdampfung des Lösungsmittels (meist Wasser) des Stoffgemischs, gefolgt von der thermischen Umsetzung des mindestens einen Ausgangsstoffs zu den Partikeln und endet mit der Unterschreitung des Siedepunkts des Lösungsmittels. Die Reaktionsdauer ist daher eine Funktion der Temperatur und der spezifischen Reaktionsbedingungen.

Kern der Erfindung ist es, innerhalb einer sehr kurzen Reaktionsdauer aus dem Stoffgemisch Partikel herzustellen. Die gewählte Reaktionsdauer ist so kurz gewählt, dass den erhaltenen Partikeln kaum Zeit gegeben ist, um bei der thermischen Umsetzung (Reaktion) von Ausgangsstoffen zu Partikeln auftretende Defekte im chemischen Aufbau der Partikel zu beheben (auszuheilen). Defekte sind Fehler in entstandenen Gittern, aus denen die Partikel aufgebaut sind. Außerdem wird durch die Reaktionsdauer und das extrem schnelle Abkühlen auf die Zieltemperatur ein Sintern der Partikel weitgehend vermieden, so dass die Partikel im Verhältnis zu ihrem Volumen große Oberflächen aufweisen und / oder porös sind. Außerdem wird eine Bildung von Agglomeraten von Partikeln weitestgehend verhindert. Partikel, die nach dem erfindungsgemäßen Verfahren hergestellt sind, können aus nur einem Ausgangsstoff hergestellt sein. Eine hohe Reaktivität ist durch eine hohe Defektrate erreicht. Eine Kombination von Materialien unterschiedlicher Eigenschaften ist möglich, aber nicht erforderlich.

Bei der Herstellung von reaktiven Partikeln im Sinne der Beschreibung wirken eine Vielzahl von Bedingungen und auftretenden Wechselwirkungen auf den Herstellungsvorgang ein. Es ist daher erforderlich, die einzelnen Bedingungen wie Temperaturen, Drücke, Stoffmengen, Strömungsgeschwindigkeiten, Reaktions- und Abkühldauern usw. zu kontrollieren und zu steuern. Üblicherweise ist eine experimentelle Ermittlung und Optimierung der Bedingungen sinnvoll.

Nachfolgend umfasst der Begriff der Steuerung auch immer die alternative Möglichkeit einer Regelung. Wird ein Parameter als steuerbar oder gesteuert beschrieben, ist dieser immer alternativ auch regelbar bzw. geregelt.

Da das Verfahren kontinuierlich betrieben wird, durchläuft ein beispielhaft ausgewählter Anteil des Stoffgemisches nacheinander die oben genannten Schritte. Dabei laufen bei einer kontinuierlichen Verfahrensführung die genannten Schritte zeitlich parallel (simultan) zueinander ab.

Unter einem Partikel wird ein fester Körper verstanden, der grundsätzlich eine beliebige Form aufweisen kann. Die jeweiligen Formen und Dimensionen von Partikeln können verfahrensbedingt zueinander ähnlich sein. Vorzugsweise weisen die mittels des erfindungsgemäßen Verfahrens hergestellten Partikel bestimmte, mittels der Art der Verfahrensführung einstellbare, Dimensionen auf. Die Dimensionen werden vereinfachend als ein mittlerer Durchmesser der Partikel angegeben.

Vorzugsweise weisen die Partikel im Verhältnis zu ihren Volumina eine große Oberfläche auf. Besonders vorteilhaft ist es, wenn die Partikel eine hohe Reaktivität zeigen. Die Partikel können neben dem Ausgangsstoff weitere Stoffe chemisch und / oder physikalisch gebunden beinhalten.

Ein Ausgangsstoff eines Partikels muss kein reiner Stoff im chemischen Sinne sein. Als Ausgangsstoffe können beispielsweise feste Körper, Gemische von Stoffen (sog. Präkursoren) eingesetzt werden.

Der Nebel kann beispielsweise durch eine Beaufschlagung des Stoffgemisches mittels Ultraschall oder mittels eines piezoelektrisch betriebenen Verneblers erzeugt werden. Es ist auch möglich, den Nebel zu erzeugen, indem ein Anteil des Stoffgemisches in das Trägergas eingesprüht wird oder das Trägergas zusammen mit dem Stoffgemisch durch eine oder mehrere Düsen gepresst wird. Günstig sind dabei sogenannte Zweistoffdüsen, bei denen an einer Düse das Stoffgemisch und an der anderen Düse das Trägergas bereitgestellt wird. Das Trägergas kann passiv oder aktiv befördert werden und den Trägergasstrom bilden. Sind in dem Trägergasstrom Tröpfchen des Stoffgemisches enthalten, wird von einem Eduktstrom gesprochen. Nachfolgend wird nur noch auf den Eduktstrom Bezug genommen.

Bei Verwendung eines Ultraschallverneblers ist dieser vorzugsweise so gestaltet, dass Nebel mit Tröpfchen kleiner Durchmesser ausgeleitet und für das erfindungsgemäße Verfahren bereitgestellt wird. Das erfindungsgemäße Verfahren kann insbesondere mit einem so gestalteten Ultraschallvernebler durchgeführt werden.

Das Stoffgemisch enthält vorzugsweise mindestens ein Lösungsmittel, beispielsweise Wasser, in dem der mindestens eine Ausgangsstoff suspendiert, emulgiert, dispergiert und/oder gelöst vorliegt.

Als Trägergas wird vorzugsweise Luft, Sauerstoff und dessen Abkömmlinge (z. B. O₃), sauerstoffhaltige Verbindungen für oxidative Prozesse oder Stickstoff, Argon, Helium oder Wasserstoff für inerte oder reduktive Prozesse verwendet.

Die Tröpfchen des Nebels weisen vorzugsweise mittlere Durchmesser von 50 µm und darunter auf. Besonders bevorzugt sind Tröpfchen mit mittleren Durchmessern von 10 µm und darunter, beispielsweise jeder mögliche Durchmesser von 1 bis 10 µm.

Über eine gezielte Beeinflussung der Zusammensetzung des Stoffgemisches, beispielsweise des Verhältnisses zwischen einem Lösungsmittel wie z. B. Wasser und dem Ausgangsstoff, kann z. B. der Feststoffanteil des Reaktionsstromes (Suspension, Dispersion) eingestellt werden. Über den Feststoffanteil ist die Größe der erhaltenen Partikel beeinflussbar.

Der Eduktstrom kann durch Wirkung einer Pumpe in den Reaktorraum eingeleitet werden. Es ist in weiteren Ausgestaltungen des erfindungsgemäßen Verfahrens möglich, dass der Eduktstrom in den Reaktorraum gerissen wird, indem durch einen weiteren Gasstrom, vorzugsweise durch den Heißgasstrom, in dem Reaktorraum wenigstens örtlich strömungsbedingt ein Unterdruck erzeugt wird und der Eduktstrom am Ort des Unterdrucks eingeleitet wird (Wirkungsweise einer Strahlpumpe).

In einer vorteilhaften Ausgestaltung des erfindungsgemäßen Verfahrens wird als Zieltemperatur eine Temperatur gewählt, die unterhalb der Starttemperatur und unterhalb einer verbindungsspezifischen Temperatur in der gegebenen Reaktionsatmosphäre liegt. Bei und oberhalb der verbindungsspezifischen Temperatur erfolgt eine Veränderung von Oxidationszuständen oder einzelner Atome und Moleküle in der Gitterstruktur der Partikel.

In einer alternativen Ausgestaltung des erfindungsgemäßen Verfahrens ist es möglich, die Zieltemperatur so niedrig zu wählen, dass die Taupunkttemperatur, beispielsweise eines in dem Reaktionsstrom enthaltenen Lösungsmittels, erreicht oder unterschritten wird. Dadurch wird eine Kondensation des Lösungsmittels bewirkt, wobei die erfindungsgemäß hergestellten Partikel in dem Kondensat aufgenommen (suspendiert) werden können. Das Lösungsmittel kann bereits in dem Stoffgemisch enthalten sein. Es kann in weiteren Ausführungen auch erst dem Reaktionsstrom zugesetzt werden. Dies kann auch erst während der Abkühlung geschehen. Beispielsweise kann das Lösungsmittel, beispielsweise Wasser, in dem Kühlstrom enthalten sein. Je nach Mengenverhältnis von Lösungsmittel und Partikeln sowie dem Verhalten der Partikel in der Suspension sind die Eigenschaften der so erhaltenen Suspension wie Viskosität, Extinktion, spezifische Dichte etc. einstellbar.

Vorzugsweise weist der Reaktionsstrom über die gesamte Reaktionsdauer eine Reaktionstemperatur auf, die gleich der Starttemperatur oder oberhalb der Starttemperatur liegt. Die Starttemperatur liegt beispielsweise bei 150°C, vorzugsweise sind aber Starttemperaturen von größer 150°C, beispielsweise 350°C, 400°C, 600°C oder 800°C gewählt. Die Reaktionstemperatur wird als eine mittlere Reaktionstemperatur verstanden. Die Reaktionstemperatur kann entlang der Reaktionsstrecke schwanken, insbesondere abnehmen. Der Begriff der Reaktionstemperatur kann daher einen Temperaturbereich beschreiben.

Es stellt eine besonders bevorzugte Ausgestaltung des erfindungsgemäßen Verfahrens dar, wenn die Abkühldauer, über die der Reaktionsstrom von der Reaktionstemperatur auf die Zieltemperatur abgekühlt wird, längstens 2 Sekunden, besser aber längstens 150 ms, günstigerweise längstens 50 ms, bevorzugt aber längstens 25 ms beträgt. Dabei werden Abkühlraten von mindestens 1500 K/s, vorzugsweise aber von 3000 - 5000 K/s, beispielsweise 4000 K/s, realisiert. Dabei bezieht sich die Abkühldauer auf die Abkühlung der Partikel, die deutlich von einer Abkühlung der gasförmigen Anteile des Reaktionsstroms abweichen kann. Einfluss auf die Abkühldauer der Partikel haben beispielsweise das Verhältnis der jeweiligen Partikelmasse zur jeweiligen Oberfläche und der damit verbundene konvektive Abtransport von Wärme vom Partikel.

Die Abkühldauer steht mit der Reaktionsdauer nicht in direktem Zusammenhang, sondern ist vielmehr stark durch das Verhältnis der Massen von Reaktionsstrom und einem Kühlstrom beeinflusst.

Der Kühlstrom kann durch ein inertes Medium gebildet sein, durch dessen Verwendung eine weiter andauernde Oxidation des Reaktionsstroms, respektive eine weiter andauernde Oxidation dessen Bestandteile, verhindert wird. Es ist ebenfalls möglich, durch eine zusätzliche Zufuhr von Sauerstoff eine Oxidation des Reaktionsstroms / dessen Bestandteile zu fördern. Zur Erhöhung der Kühlleistung kann eine Flächenkühlung hinzugefügt werden. Außerdem kann durch Eindüsen von Kühlmedien mit einer hohen Wärmekapazität wie z. B. Wasser, Wassernebel oder Trockeneis, Flüssigstickstoff die Abkühlung des Reaktionsstroms beschleunigt werden.

Um die Erhaltung der Reaktionstemperatur über die gesamte Reaktionsstrecke zu gewährleisten, kann dem Reaktorraum, insbesondere entlang der Reaktionsstrecke, direkt oder indirekt Wärmeenergie zugeführt werden. Es ist dabei möglich, den Reaktorraum elektrisch, induktiv, chemisch durch exotherme Reaktionen mittels elektromagnetischer Strahlung wie Mikrowellenstrahlung oder Infrarotstrahlung zu heizen. Das Heizen kann gesteuert erfolgen. Es ist ferner möglich, dass das Heizen des Reaktionsstroms teilweise oder gänzlich durch die Zufuhr des Heißgasstroms erfolgt.

Der Heißgasstrom kann beispielsweise eine Temperatur ausgewählt aus einem Bereich von 1400 bis 1500°C aufweisen. Dabei erlauben hohe Temperaturen des Heißgasstroms vorteilhaft eine Verringerung des Heißgasvolumenstroms, wodurch ein effizienteres Heizen des Heißgasstroms ermöglicht wird.

Der Heißgasstrom wird vorzugsweise flammenlos, beispielsweise elektrisch, induktiv, mittels elektromagnetischer Strahlung wie Mikrowellenstrahlung oder Infrarotstrahlung erhitzt. Ein flammenloses Erhitzen erlaubt vorteilhaft, dass der Heißgasstrom bei einer oxidativen Reaktionsführung einen hohen Anteil an Sauerstoff aufweist. Der Heißgasstrom kommt bei einem flammenlosen Erhitzen nicht direkt mit einer Flamme in Kontakt. Dieser ist aufgrund seiner hohen Reaktivität für eine schnelle thermische Umsetzung sehr förderlich und unterstützt die Ausbildung von Partikeln mit Defekten und / oder von sauerstoffhaltigen Gruppen (Molekülen) an den Partikeln. Alternativ ist auch ein Heizen mittels einer Flamme möglich, wobei die Erhitzung dabei indirekt gestaltet wird, sodass die Zusammensetzung des Heißgasstroms nicht durch die Flamme direkt beeinflusst wird. Möglich wäre ein indirektes Heizen unter Vermittlung eines Wärmetauschers.

Beispielsweise ist der Heißgasstrom in einer der Zuführung des Heißgasstroms zum Streckenanfang dienenden Heißgaszuführung indirekt durch eine gesteuerte Erwärmung außenliegender Bereiche der Heißgaszuführung mittels eines Heizmediums und / oder innenliegender und / oder außenliegender Bereiche der Heißgaszuführung durch eine gesteuerte Bestrahlung mit einer elektromagnetischen Strahlung geheizt.

Ein Erhitzen kann daher erfolgen, indem die Wandung der Heißgaszuführung oder Körper, die in der Heißgaszuführung vorhanden sind, mittels Strahlung, wie beispielsweise Radiowellen, Mikrowellen, Infrarotstrahlung, radioaktive Strahlung oder Ultraschall, erhitzt werden. Außerdem ist eine Erhitzung mittels Induktion oder ohmschem Heizer möglich. Zur Bereitstellung und gerichteten Übertragung von Wärmeenergie können aus dem Stand der Technik bekannte Geräte verwendet werden, mittels denen die vorgenannten Strahlungen erzeugt und abgegeben werden können bzw. mit denen geeignete elektromagnetische Felder erzeugt werden können. Die vorstehend genannten Möglichkeiten und Geräte können durch einen Fachmann auch miteinander kombiniert werden.

Es ist für eine Erzeugung von reaktiven Partikeln förderlich, wenn der Reaktionsstrom mindestens über die Reaktionsstrecke eine mittlere Strömungsgeschwindigkeit von mindestens 1 m/s, vorzugsweise aber von mindestens 2 m/s, beispielsweise 3 m/s, 5 m/s, 7 m/s, 10 m/s oder 20 m/s, aufweist. Durch hohe mittlere Strömungsgeschwindigkeiten des Reaktionsstroms, und somit auch der in dem Reaktionsstrom entstehenden Partikeln, unterliegen diese zusätzlich mechanischen Beanspruchungen, die auf die Ausbildung und die Erhaltung von Defekten vorteilhaft wirken. Durch auftretende Reibungskräfte sind zusätzlich Veränderungen der Oberfläche der Partikel möglich. Die mittlere Strömungsgeschwindigkeit ist die mittlere Geschwindigkeit von Teilchen (hier: z. B. Tröpfchen und Partikel) in einer Strömung, also in einer gerichteten Bewegung einer Menge von Teilchen und kann beispielsweise als arithmetischer Mittelwert ausgedrückt werden. Die mittlere Strömungsgeschwindigkeit berechnet sich als Mittelwert der Strömungsgeschwindigkeiten über den Querschnitt eines Reaktorraums.

Es ist in weiteren Ausgestaltungen des erfindungsgemäßen Verfahrens möglich, dass der Heißgasstrom ein inertes Gas oder Gasgemisch, ein reduzierend wirkendes Gas oder Gasgemisch oder ein oxidierend wirkendes Gas oder Gasgemisch ist. Während des Mischens des Heißgasstroms mit dem Eduktstrom und während des Passierens der Reaktionsstrecke durch den Reaktionsstrom erfolgt eine Abkühlung. Diese Abkühlung des Heißgasstroms bzw. des Reaktionsstroms kann durch zusätzliches Heizen ganz oder teilweise, vorzugsweise gesteuert, ausgeglichen werden.

Es ist daher erwünscht, dass der Heißgasstrom am Streckenanfang eine Temperatur aufweist, aus der trotz einer Abkühlung durch das Mischen des mit dem Nebel beladenen Trägergasstroms (Eduktgasstrom) mit dem Heißgasstrom zu dem Reaktionsstrom und unter Berücksichtigung von Verlusten durch Wärmeleitung und Wärmeübertragung mindestens die Starttemperatur resultiert. Dementsprechend wird eine Temperatur des Heißgasstroms so gewählt und eingestellt, dass mindestens die Starttemperatur wie vorgenannt erreicht ist.

Höhere Temperaturdifferenzen zwischen dem Heißgasstrom und dem Eduktstrom führen zu einem schnelleren Übergang von Wärme auf die Tröpfchen und die daraus entstehenden Partikel. Der realisierbare Wärmeübergang beeinflusst die Reaktivität der so hergestellten Partikel. Je besser der Wärmeübergang erfolgen kann, desto kürzer kann die Reaktionsdauer gewählt werden.

Um die Reaktionstemperatur aufrechtzuerhalten und gegebenenfalls zu steuern, kann das Stoffgemisch neben dem mindestens einen Ausgangsstoff mindestens eine Substanz enthalten, die in dem Reaktionsstrom in einer exothermen chemischen Reaktion umgesetzt wird. Solche Substanzen sind organische Verbindungen wie beispielsweise kurzkettige Aminosäuren, kurzkettige Fette, langkettige Fettsäuren, langkettige Ketone, langkettige Alkohole wie beispielsweise Ethylenglycol, langkettige Alkane, Alkene und Alkine, Komplexbildner wie EDTA und Citronensäure sowie Kohlenhydrate und andere Naturstoffe. Diese Substanzen fungieren während der Reaktion in dem Reaktorraum als Brennstoff.

Die vorgenannten Substanzen können in einer weiteren Ausgestaltung auch in den Trägergasstrom, in den Eduktgasstrom oder in den Reaktorraum eingeleitet, vorzugsweise eingesprüht werden. Durch eine dieser Ausgestaltungen oder durch eine Kombination daraus ist eine schnelle und wirkungsvolle gesteuerte Beeinflussung der Betriebsbedingungen wie z. B. die Reaktionstemperatur, der Sauerstoffgehalt des Eduktstroms usw. ermöglicht.

Im Rahmen des erfindungsgemäßen Verfahrens können auch reduktive Reaktionen durchgeführt werden. So kann beispielsweise ein Edelmetallsalz oder ein metallorganischer Edelmetallkomplex in ein reines Edelmetall umgewandelt werden. Dieses kann beispielsweise als Katalysator verwendet werden.

Es liegt ferner im Rahmen der Erfindung, dass erfindungsgemäße Verfahren zur Herstellung von Perowskit-Partikeln zu verwenden. Bei der Herstellung solcher Partikel sind hohe Reaktionstemperaturen erforderlich.

Durch eine Einstellbarkeit eines Feststoffanteils zum Gasanteil des Reaktionsstroms kann vorteilhaft das Agglomerisationsverhalten der Partikel geregelt werden.

Die entstehenden und hergestellten Partikel können aufgrund ihrer geringen Masse und der hohen Strömungsgeschwindigkeiten von mindestens 1m/s im Reaktionsstrom transportiert werden.

In einer sehr vorteilhaften Ausgestaltung des erfindungsgemäßen Verfahrens wird eine Länge der Reaktionsstrecke durch eine gesteuerte Festlegung des Ortes des Streckenanfangs eingestellt. Ein Ort des Streckenanfangs kann vereinfachend durch eine Position entlang der Reaktionsstrecke festgelegt werden. Die Reaktionsstrecke ist der Einfachheit halber als eine Linie angenommen, durch die der Verlauf der Reaktionsstrecke darstellbar ist. In einem einfachen Beispiel ist der Reaktorraum der Innenraum eines Hohlzylinders und die Reaktionsstrecke ist entlang der Symmetrieachse des Reaktorraums gerichtet. Durch die Symmetrieachse ist zwischen Streckenanfang und Streckenende zugleich die Linie gegeben, durch welche die Reaktionsstrecke dargestellt wird. Der Streckenanfang kann beispielsweise durch die technischen Mittel, durch welche der Eduktstrom und der Heißgasstrom in den Reaktorraum geführt werden, eingestellt werden, indem die räumliche Ausrichtung der Mündung dieser Mittel gezielt eingestellt wird. So können eine vorhandene Eduktstromzuleitung und / oder eine vorhandene Heißgasstromzuleitung relativ zueinander in verschiedenen Winkel ausgerichtet werden und / oder deren jeweilige Mündungen in eine bestimmte räumliche Anordnung, beispielsweise durch geeignete Verstellmechanismen, zueinander gebracht werden.

Der Streckenanfang ist der Ort, an dem der Siedepunkt des Lösungsmittels des Stoffgemischs erreicht wird. Das Streckenende ist durch einen Ort bestimmt, an dem der Siedepunkt des Lösungsmittels des Stoffgemischs unterschritten wird. Die Länge der Reaktionsstrecke lässt sich demnach durch eine mechanische Veränderung des Weges vom Streckenanfang bis zum Kühlstrom einstellen. Es ist auch möglich, die Länge der Reaktionsstrecke durch eine gezielte Veränderung des Wärmeübergangs und damit ein schnelleres Erreichen der Starttemperatur einzustellen.

Ferner ist zur Einstellung der Länge der Reaktionsstrecke eine längsverstellbare Zuführungseinheit in Form einer innen hohlen Lanze mit einer Auslassöffnung zum Durchleiten des Eduktstroms in den Reaktorraum einsetzbar. Außerdem können die Temperatur des Heißgasstroms, des Eduktstroms und / oder des Reaktorraums gesteuert verändert werden, um die Länge der Reaktionsstrecke zu beeinflussen. Ferner kann die Länge der Reaktionsstrecke von Zusatzstoffen in dem Eduktstrom und / oder in dem Reaktionsstrom beeinflusst und eingestellt werden. Einen Einfluss auf die Länge der Reaktionsstrecke haben ebenfalls die Art des Lösungsmittels, das Stoffgemisch und die Partikel. Eine Vorrichtung zur Durchführung des erfindungsgemäßen Verfahrens besitzt den Reaktorraum, eine Vernebelungseinheit zur Vernebelung des Stoffgemisches, eine Zuführungseinheit, z. B. eine Eduktstromzuleitung, zur Zuführung des Nebels mit einem Transportgas als Eduktstrom in den Reaktorraum, eine Heißgaszuführung zur Zuführung des Heißgasstroms in den Reaktorraum, sowie eine Kühlstromzuführung zur Zufuhr des Kühlstroms in den Reaktorraum. Diese Vorrichtung ist dadurch gekennzeichnet, dass die Zuführungseinheit eine innen hohle Lanze mit einer Auslassöffnung zum Durchleiten des Eduktstroms durch die Lanze und zum Entlassen des Eduktstroms durch die Auslassöffnung in den Reaktorraum aufweist und die Lanze mit einer Einstecklänge in den Reaktorraum ragt.

Der Lanze kann eine regelbare Kühleinrichtung zugeordnet sein, mittels der bis zum Entlassen des Eduktstroms durch die Auslassöffnung in den Reaktorraum eine Temperatur des Eduktsstroms unterhalb der Starttemperatur gewährleistet ist.

Die Lanze ist bei Bedarf kühlbar (indirekt durch einen erhöhten Trägergasstrom oder direkt durch ein aktives Kühlsystem) um sicherzustellen, dass erst nach Austritt der Edukte aus der Lanze eine Reaktion stattfindet. Durch die Kühleinrichtung und die Kühlung der Lanze ist die Reaktion genauer steuerbar.

Die Kühlung kann als direkte Kühlung in Form eines aktiven Kühlsystems beispielsweise mit Kühlleitungen zur Zufuhr eines kühlenden Medienstromes sowie durch eine Durchführung der Lanze durch eine Kühlkammer ausgebildet sein.

Die Austrittsöffnung der Lanze und eine Zuführungsöffnung der Heißgaszuführung sind in einem Bereich des Reaktorraums angeordnet. Die beiden Ströme Eduktstrom und Heißgasstrom sind bei einem Betrieb der Vorrichtung in einem Bereich des Reaktorraums zusammenführbar und miteinander mischbar. Dieser Bereich wird für die Beschreibung vereinfachend auf einen Punkt reduziert, der den Streckenanfang einer Reaktionsstrecke darstellt. Für jeden der beiden Ströme Eduktstrom und Heißgasstrom ist eine Mittellinie gezeigt. Der Streckenanfang wird durch den Schnittpunkt der beiden Mittellinien gebildet.

Durch eine Ausgestaltung der Vorrichtung, bei der die Einstecklänge gesteuert veränderbar ist, ist vorteilhaft eine leichte, schnelle und genaue Steuerung des erfindungsgemäßen Verfahrens ermöglicht, da die Länge der Reaktionsstrecke veränderbar ist. Außerdem ist die Vorrichtung durch diese Ausgestaltung verhältnismäßig leicht an die Verwendung eines anderen Stoffgemisches und / oder die Herstellung anderer, z. B. kleinerer oder größerer Partikel, anpassbar.

Ferner ist es möglich, dass die Heißgaszuführung und / oder die Kühlstromzuführung im Bereich ihrer Mündung schwenkbare Düsen oder Klappen oder durchströmbare Kugelgelenke aufweisen, durch deren Wirkung die Winkel, unter denen die jeweilige Heißgasströme bzw. Kühlströme in den Reaktorraum gelenkt sind, verstellbar sind. Durch eine solche Verstellmöglichkeit der Winkel kann die Vorrichtung zur Erzielung erwünschter Ergebnisse eingestellt und korrigiert werden. So ist die Länge der Reaktionsstrecke über einen gewissen Bereich gesteuert veränderbar. Zudem kann die jeweilige Richtung der Ströme in die Mitte des Reaktionsraums gerichtet werden. Alternativ kann die jeweilige Richtung der Ströme individuell eingestellt und korrigiert werden.

Es ist bevorzugt, dass die Partikel einen mittleren Durchmesser (d₉₅) von ≤ 200 µm aufweisen. Als Messmethode kommen Verfahren in Betracht, die auf der Beugung von Strahlen beruhen, beispielsweise die Nutzung der Laserbeugung. Bei der Laserbeugung wird ein Beugungsmuster einer Anzahl von Partikeln (Partikelkollektiv) messtechnisch erfasst. Durch die Anwendung mathematischer Verfahren lässt sich die Partikelgrößenverteilung anhand des erfassten Beugungsmusters berechnen. Genauere Ergebnisse und eine höhere Auflösung werden durch die Nutzung kürzerer Wellenlängen, beispielsweise von radioaktiver Strahlung, erreicht.

Die Defektraten der mittels dem erfindungsgemäßen Verfahren hergestellten Partikel liegen mindestens 5%, beispielsweise mindestens 25% oder mindestens 50% höher als die Defektraten bekannter Methoden des Standes der Technik. Die Defektrate wird in Bezug auf ein ideales Gitter (0% Defektrate) des betreffenden Stoffs oder Stoffgemischs definiert. Die Defektrate der Festkörperstruktur eines Metalloxidgitters kann mittels einer PXRD-Messung (Pulverröntgendiffraktometrie) detektiert und über die Rietvelt-Methode ausgewertet werden. Die Rietvelt-Verfeinerung gibt die Abweichung vom idealen Gitter wieder.

Als eine Alternative zur PXRD kann die RAMAN-Spektroskopie verwendet werden, um den Defektanteil (Defekttrate) als Summenparameter nachzuweisen. Die Kalibrierung der RAMAN-Spektroskopie ist allerdings stoffspezifisch und aufwendig. Die Erfindung wird nachfolgend anhand von Ausführungsbeispielen und Abbildungen näher erläutert. Es zeigen:
- Fig. 1: ein erstes Ausführungsbeispiel einer Vorrichtung mit einer feststehenden Lanze,
- Fig. 2: ein zweites Ausführungsbeispiel einer Vorrichtung mit einer verschiebbaren Lanze,
- Fig. 3: eine erste Tabelle mit Ergebnissen einer Pulverröntgendiffraktometrie mit Rietvelt-Analyse zweier Proben von Kobalt-Spinellen,
- Fig. 4: eine zweite Tabelle mit Ergebnissen von RAMAN-Messungen der Proben,
- Fig. 5: eine dritte Tabelle mit Ergebnissen aus XPS-Messungen der Proben,
- Fig. 6: XPS-Spektren der Proben zweier Kobalt-Spinelle und
- Fig. 7: eine Ausführung einer Vernebelungseinheit als Ultraschallvernebler.

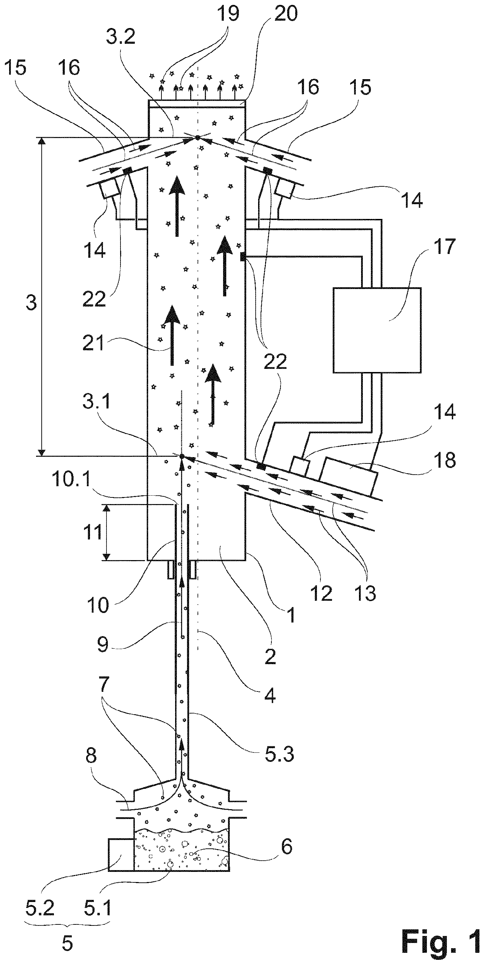

In einem ersten, in Fig. 1 gezeigten, Ausführungsbeispiel einer Vorrichtung sind als wesentliche Elemente ein Reaktor 1 mit einem Reaktorraum 2, eine Heißgaszuführung 12, eine Vernebelungseinheit 5, eine Zuführungseinheit 5.3 zur Zuführung eines Nebels 7 mit einem Eduktstrom 9 in den Reaktorraum 2 in Form einer innen hohlen Lanze 10 mit einer Auslassöffnung 10.1, die mit einer Einstecklänge 11 in den Reaktorraum 2 ragt und eine Kühlstromzuführung 15 vorhanden.

Der Reaktor 1 ist durch einen aufrecht stehend dargestellten Hohlzylinder gegeben, durch dessen Innenraum der Reaktorraum 2 gebildet ist. Es ist eine Längsachse 4 des Reaktorraums 2 gezeigt, die sich in der Mitte des Reaktorraums 2 entlang seiner Längsausdehnung erstreckt. In einem nach unten weisend gezeigten Bereich des Reaktorraums 2 mündet die Heißgaszuführung 12 in den Reaktorraum 2. Die Heißgaszuführung 12 ist als ein einmündendes Rohr ausgebildet, dessen Mittelachse schräg nach oben in den Reaktorraum 2 gerichtet ist. Ebenfalls in den nach unten weisend gezeigten Bereich des Reaktorraums 2 mündet die Lanze 10 in den Reaktorraum 2. Die Lanze 10 ist als ein koaxial zur Längsachse 4 und nach oben in den Reaktorraum 2 ragendes Rohr ausgebildet. Die Mittellinie der Heißgaszuführung 12 und eine Mittellinie der Lanze 10 schneiden sich in einem Schnittpunkt innerhalb des Reaktorraums 2. Durch eine Position, die durch eine von dem Schnittpunkt ausgehende Senkrechte auf die Längsachse erhalten wird, ist der Streckenanfang 3.1 einer Reaktionsstrecke 3 gegeben.

Die Lanze 10 ist über eine Eduktstromzuleitung 5.3 mit einem Vorratsbehälter 5.1 verbunden, die beide Teil der Vernebelungseinheit 5 (nur schematisch gezeigt) sind. An dem Vorratsbehälter 5.1 ist ein Vernebler 5.2 angekoppelt, durch den Anteile eines in dem Vorratsbehälter 5.1 befindlichen Stoffgemischs 6 in den Nebel 7 überführbar sind. Der Nebel 7 besteht aus Tröpfchen des Stoffgemischs 6 und ist durch Zufuhr von Luft als Trägergas und Ausbildung eines Trägergasstroms 8 mitgerissen und als Eduktstrom 9 von dem Vorratsbehälter 5.1 durch die Eduktstromzuleitung 5.3 in den Reaktorraum 2 überführbar.

Der Vernebler 5.2 ist als ein Ultraschallvernebler ausgebildet. In weiteren Ausführungsbeispielen der erfindungsgemäßen Vorrichtung kann der Vernebler 5.2 durch eine Pumpe und eine Zweistoffdüse (beide nicht gezeigt) gebildet sein. Durch die Zweistoffdüse wird das Stoffgemisch 6 und der Trägergasstrom 8 unter Druck geführt, durch Wirkung der Zweistoffdüse der Nebel 7 erzeugt und durch den Trägergasstrom 8 mitgerissen. Der Trägergasstrom 8 mit dem Nebel 7 ist als Eduktstrom 9 dem Reaktorraum 2 zuführbar. In einer weiteren Ausführung kann die Zweistoffdüse auch an der Lanze 10 angeordnet sein und in den Reaktorraum 2 ragen. Das Mischen von Stoffgemisch 6 und Trägergasstrom 8 erfolgt dann direkt im Reaktorraum 2.

In einem nach oben weisenden Bereich des Reaktorraums 2 münden sich gegenüberliegend zwei Kühlstromzuführungen 15 in den Reaktorraum 2 ein. Deren Mittellinien und die Längsachse 4 durchdringen sich in einem weiteren Schnittpunkt, durch den ein Streckenende 3.2 der Reaktionsstrecke 3 gegeben ist. In weiteren Ausführungen können nur eine oder aber mehr als zwei Kühlstromzuführungen 15 vorhanden sein. Diese können zudem übereinander und / oder zueinander versetzt angeordnet sein.

Dem Reaktor 1 ist ferner eine Steuerung 17 zugeordnet, die signaltechnisch mit einer Heizung, mehreren Lüftern 14 und einer Anzahl Sensoren 22 verbunden ist.

Die Heizung 18 arbeitet elektrisch und dient der Erhitzung eines Gases zu einem Heißgas. In weiteren Ausführungen kann die Heizung 18 als eine induktive Heizung, eine Heizung auf der Basis von Ultraschallwellen oder als eine auf elektromagnetischer Strahlung basierende Heizung ausgeführt sein.

Einer der Lüfter 14 dient der Erzeugung eines Heißgasstroms 13 in der Heißgaszuführung 12, die beiden anderen Lüfter 14 sind jeweils einer der Kühlstromzuführungen 15 zugeordnet und dienen dort jeweils der Erzeugung eines Kühlstroms 16.

In weiteren Ausführungen der Vorrichtung kann der Eduktstromzuleitung 5.3 ein Lüfter 14 zur Erzeugung und / oder zur Aufrechterhaltung des Eduktstroms 9 zugeordnet sein. Außerdem kann der Trägergasstrom 8 mittels eines Lüfters 14 bewirkt sein. Weitere Ausgestaltungen der Vorrichtungen können auch die Verwendung einer anderen Anzahl von Lüftern 14 an den genannten Elementen der Vorrichtung vorsehen.

Die Sensoren 22 sind beispielhaft in dem Reaktorraum 2, in der Heißgaszuführung 12 und in der Kühlstromzuführung 15 angeordnet gezeigt. Einige oder alle Sensoren 22 können auch außerhalb der jeweiligen Elemente angebracht sein. Die Sensoren 22 sind als Temperaturfühler ausgebildet. In weiteren Ausführungen der Vorrichtung können die Sensoren 22 auch Drucksensoren, Strahlungssensoren, Strömungssensoren Temperatur- oder Konzentrationssensoren sein. Es sind die Anordnung anderer Anzahlen von Sensoren 22 sowie die Anordnung anderer Typen von Sensoren 22 möglich.

Der Reaktorraum 2 weist an einer nach oben zeigenden Öffnung einen Abscheider 20 in Form eines Filters (Zyklon, (Wasser-)falle, Sammelraum, Wäscher, Elektrofilter, mechanische Filter wie Filtervlies oder Keramikfilter) auf. An dem Abscheider 20 werden hergestellte Partikel 19 vereinzelt bzw. gesammelt. Es kann eine automatisierte Filterabreinigung vorhanden sein, wodurch ein kontinuierlicher Betrieb der Vorrichtung unterstützt ist.

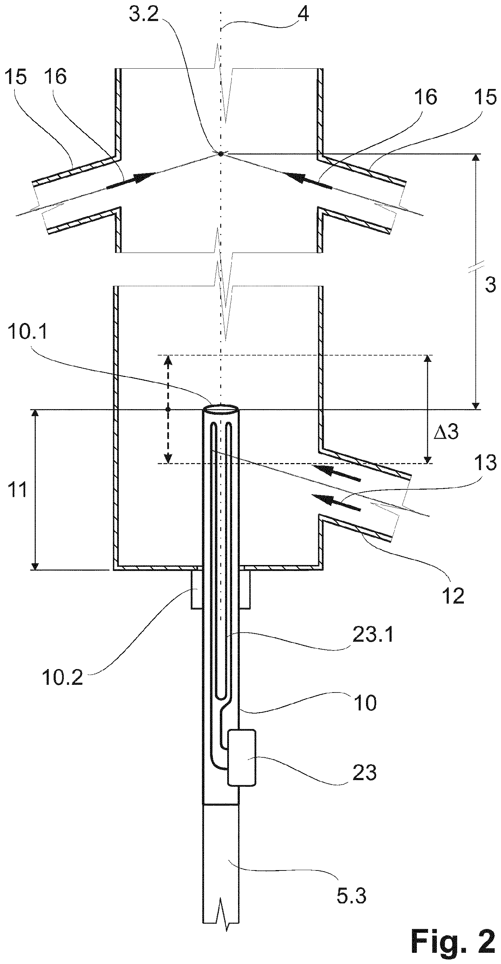

In einem zweiten Ausführungsbeispiel gemäß Fig. 2 ist der Lanze 10 eine Zustelleinrichtung 10.2 zugeordnet. Diese steht signaltechnisch mit der Steuerung 17 in Verbindung (nur angedeutet) und erlaubt eine gesteuerte Veränderung der Einstecklänge 11 durch ein Heraus- bzw. Hineinfahren der Lanze 10 aus dem bzw. in den Reaktorraum 2. Die Mittellinie der Lanze 10 (gestrichelt gezeigt) fällt mit der Längsachse 4 des Reaktorraums 2 zusammen. Mittels der Zustelleinrichtung 10.2 ist die Einstecklänge 11 um den Betrag Δ3 (Delta 3) veränderbar, wodurch auch die Länge der Reaktionsstrecke 3 um höchstens den Betrag Δ3 gesteuert veränderbar ist.

Ist die Lanze 10 soweit aus dem Reaktorraum 2 gefahren, dass sich die Auslassöffnung 10.1 oberhalb der Mittellinie der Heißgaszuführung 12 (gestrichelt gezeigt) befindet, ist der Streckenanfang 3.1 der Reaktionsstrecke 3 wie zu Fig. 1 beschrieben durch den Schnittpunkt der Mittellinien von Lanze 10 und Heißgaszuführung 12 gegeben. Ist jedoch die Lanze 10 soweit in den Reaktorraum 2 hineingefahren, dass die Auslassöffnung 10.1 unterhalb der Mittellinie der Heißgaszuführung 12 angeordnet ist, befindet sich der Streckenanfang 3.1 auf Höhe der Auslassöffnung 10.1.

Ist die Vorrichtung mit hohen Drücken des Eduktstroms 9 und / oder mit hohen Geschwindigkeiten des Eduktstroms 9 relativ zu dem Druck und / oder der Geschwindigkeit des Heißgasstroms 13 betrieben, so stellt sich der Streckenanfang 3.1 erst eine Strecke vor der Auslassöffnung 10.1 ein, da erst dort effektiv ein Mischen von Eduktstrom 9 und Heißgasstrom 13 erfolgt.

Da die Einmündungen der Kühlstromzuführung 15 sowie deren Eintrittswinkel gegenüber dem Reaktorraum 2 unveränderlich sind, ist eine Länge der Reaktionsstrecke 3 durch ein Verstellen der Lanze 10, genauer deren Auslassöffnung 10.1, relativ zur (Mittellinie) der Heißgaszuführung 12 veränderbar.

In weiteren Ausgestaltungen der Vorrichtung sind die Heißgaszuführung 12 und / oder die Kühlstromzuführung(-en) 15 durch ein durchströmbares Kugelgelenk an den Reaktor 1 angebunden, sodass die Winkel, unter denen die jeweiligen Mittellinien in den Reaktorraum 2 gerichtet sind, innerhalb eines bestimmten Winkelbereichs verstellbar sind.

Der Lanze 10 ist eine Kühleinrichtung 23 mit Kühlleitungen 23.1 zugeordnet. Die Kühlleitungen 23.1 sind auf der äußeren Oberfläche der Lanze 10 verlaufend angeordnet und somit der Atmosphäre im Inneren des Reaktorraums 2 ausgesetzt. Durch die Kühleinrichtung 23 wird ein Kühlmedium durch die Kühlleitungen 23.1 gepumpt.

In weiteren Ausgestaltungen können die Kühlleitungen 23.1 in der Wand der Lanze 10 und / oder auf einer inneren Oberfläche der Lanze 10 angeordnet sein. In letzterem Fall stehen die Kühlleitungen 23.1 direkt mit dem Eduktstrom 9 in Kontakt. Anhand der Fig. 1 wird nachfolgend die Durchführung des erfindungsgemäßen Verfahrens beschrieben.

In dem Vorratsbehälter 5.1 ist ein Stoffgemisch 6 zur Verfügung gestellt, welches Wasser als Lösungsmittel und Cobalt(II)-nitrat-Hexahydrat (Co(NO₃)₂ x 6H₂O) als Ausgangsstoff der herzustellenden Partikel 19 als Lösung enthält. Mittels des Verneblers 5.2 wird ein Anteil des Stoffgemischs 6 in dem Trägergas in feine Tröpfchen mit einem mittleren Durchmesser von ca. 10 µm überführt. Dieser so gebildete Nebel 7 wird durch den erzeugten Trägergasstrom 8 in die Eduktstromzuleitung 5.3 mitgerissen durch die Lanze 10 und die Auslassöffnung 10.1 als Eduktstrom 9 in den Reaktorraum 2 geleitet. Dabei wird eine Temperatur des Eduktstroms 9 durch in der Lanze 10 angeordnete Temperatursensoren 22 erfasst und die Messwerte an die Steuerung 17 übermittelt. Der Eduktstrom 9 weist bei seiner Zufuhr in den Reaktorraum 2 eine Temperatur auf, die unterhalb einer Starttemperatur liegt, bei welcher der in dem Eduktstrom 9 enthaltene Ausgangsstoff zu den Partikeln 19 umgesetzt wird.

Der Heißgaszuführung 12 wird ein Gas zur Verfügung gestellt und mittels der elektrisch betriebenen Heizung 18 auf eine Temperatur von 1450 °C aufgeheizt. Mittels eines Lüfters 14 wird das Gas als Heißgasstrom 13 durch die Heißgaszuführung 12 dem Reaktorraum 2 zugeführt. Als Lüfter 14 sind neben konventionellen Bauarten auch die Zufuhr von Druckluft mit MFC oder frequenzgesteuerte Lüfter möglich.

Der Heißgasstrom 13 strömt mit einer Geschwindigkeit von mehr als 1 m/sec aus der schräg nach oben gerichteten Mündung der Heißgaszuführung 12. Oberhalb des Heißgasstroms 13 entsteht in dem geschlossenen Reaktorraum 2 (entsprechend dem bekannten Prinzip einer Strahlpumpe) ein Unterdruck, da der Heißgasstrom 13 schnell nach oben abfließt. Durch den Unterdruck wird der Eduktstrom 9 aus der Lanze 10 gerissen.

Eduktstrom 9 und Heißgasstrom 13 strömen aufeinander zu und treffen am Streckenanfang 3.1 aufeinander. Durch den so entstehenden Kontakt werden beide Ströme miteinander vermischt, wobei der Eduktstrom 9 durch den Heißgasstrom 13 aufgeheizt wird. Durch den Eduktstrom 9 und den Heißgasstrom 13 wird ein Reaktionsstrom 21 gebildet, der in Richtung der Längsachse 4 entlang der Reaktionsstrecke mit einer mittleren Strömungsgeschwindigkeit von mehr als 1 m/sec strömt. In den Tröpfchen wird die Starttemperatur von 450-550°C überschritten und eine thermische Umsetzung des Ausgangsstoffs zu den Partikeln 19 beginnt. Zugleich verdampft schlagartig das Wasser der Tröpfchen und reißt die entstehenden chemischen Strukturen der in der Entstehung befindlichen Partikel 19 auseinander oder deformiert diese. Die Partikel 19 weisen eine unregelmäßige Form mit einer großen spezifischen Oberfläche auf.

Während der thermischen Umsetzung des Ausgangsstoffes zu den Partikeln 19 entstehen aus dem Ausgangsstoff neue chemische Verbindungen die sich teils als Gitter anordnen. Dabei kommt es auch zu Fehlern im Aufbau und in der Anordnung der Elementarzellen und Gitter.

Der Reaktionsstrom 21 erreicht nach einer Reaktionsdauer von 90 ms das Streckenende 3.2 der Reaktionsstrecke 3, an dem durch die Zufuhr des Kühlstroms 16 die Reaktionstemperatur mit einer Abkühlrate von 3000 Kelvin / Sekunde (K/s) auf eine Zieltemperatur von 60°C abgekühlt wird.

Über die gesamte Reaktionsdauer wies der Reaktionsstrom 21 eine Reaktionstemperatur auf, die oberhalb der Starttemperatur lag, sodass die thermische Umsetzung des Ausgangsstoffs nicht unterbrochen wurde.

Durch die sehr kurze Reaktionsdauer und die sehr schnelle Abkühlung des Reaktionsstroms und der entstehenden Partikel konnten aber Gitterfehler und sonstige Defekte der Partikel nicht oder nur sehr unzureichend "ausgeheilt" werden. Daher weisen viele der hergestellten Partikel eine hohe Defektrate auf. Diese hohe Defektrate bedingt eine hohe Reaktivität der Partikel in chemischen Reaktionen und prädestiniert deren Verwendung als Katalysator.

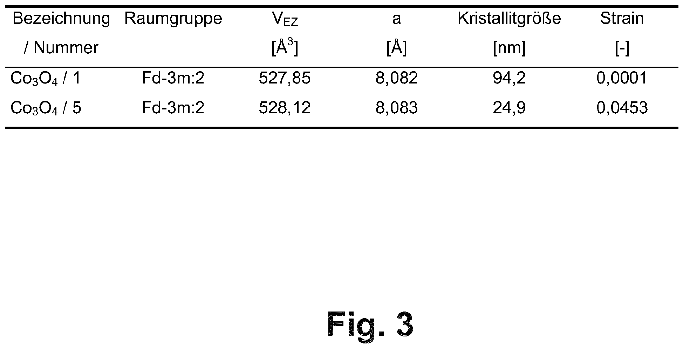

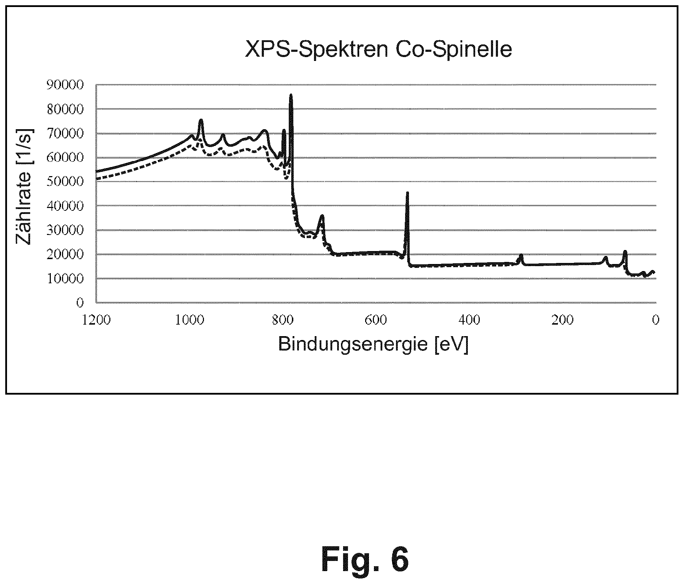

Eigenschaften von gemäß dem erfindungsgemäßen Verfahren hergestellten Partikeln werden nachfolgend unter Verweis auf drei Tabellen (Fig. 3 bis 5) und Spektren der von den Partikeln genommenen Proben (Fig. 6) beschrieben:
Es wurden je eine Menge zweier Kobalt-Spinelle (Co-Spinelle) Co₃O₄ hergestellt, wobei das erste Co-Spinell 1 (Probe Nummer 1) mittels klassischer Verfahren (Verfahren gemäß dem Stand der Technik) hergestellt und lange kalziniert wurde. Das zweite Co-Spinell 2 (Probe Nummer 5) wurde mittels des erfindungsgemäßen Verfahrens hergestellt. Klassische Verfahren sind keramische Verfahren, bei denen in einem Verfahrensschritt wenigstens ein Stoff oder ein Stoffgemisch über eine stoffabhängige Zeitdauer kalziniert, d.h. unter Wärmeeinwirkung behandelt wird, um bestehende Defekte in der Kristallstruktur so weit als möglich zu beseitigen. Gegenüber so hergestellten und kalzinierten Kristallstrukturen (Gitterstrukturen) weisen die Kristallstrukturen von mittels des erfindungsgemäßen Verfahrens hergestellten Partikeln mindestens 5%, beispielsweise mindestens 25% oder mindestens 50% höhere Defektraten auf.

Partikel der Proben 1 und 5 wurden einer Pulverröntgendiffraktometrie und einer anschließenden Rietvelt-Analyse unterzogen. Die Ergebnisse sind in der ersten Tabelle in Fig. 3 angegeben. Die Ergebnisse des klassisch hergestellten und lange kalzinierten Co-Spinells der Probe 1 zeigen keine Verschiebung bzw. keine Veränderung des Kristallgitters. Dagegen sind bei Probe 5 starke Abweichungen zu verzeichnen. Das als Strain bezeichnete Messergebnis gibt die relative Abweichung zum idealen Kristallgitter, mithin die Defektrate, an. Als Strain (engl.: Verzerrung) - genauer werden diese auch als Microstrains (Mikroverzerrungen) bezeichnet - werden Defekte einer Kristallstruktur als Messgröße mit einem relativen Zahlenwert angegeben. Dabei kann ein Defekt der Kristallstruktur beispielsweise ein vorhandenes Atom in einer anderen Oxidationsstufe, ein anderes Element, eine Leerstelle, ein zusätzliches Atom und / oder die Besetzung von Lücken, die Erweiterung von Lücken, die Auslassung von Atomgruppen oder Schichten sein. Alle diese Möglichkeiten werden in Summe über diese Methode bestimmt in dem Wert "Strain" ausgedrückt. Die Defektrate der Probe 1 beträgt 0,0001 während die Defektrate der Probe 5 0,0453 beträgt und somit 453% über der Defektrate von Probe 1 liegt.

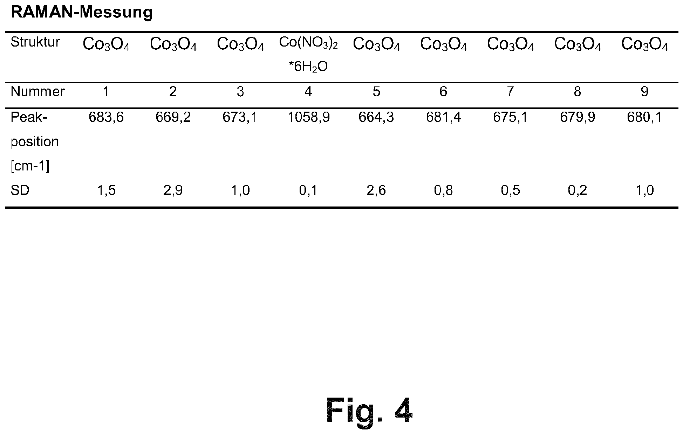

In der in Fig. 4 gezeigten zweiten Tabelle sind Ergebnisse einer RAMAN-Spektroskopie von insgesamt acht Proben von Kobalt-Spinellen sowie dem Ausgangsstoff der Herstellung der Kobalt-Spinelle aufgelistet (SD = Standardabweichung).

Positionen der Bande der Co-O-Schwingung, bestimmt über RAMAN-Spektroskopie, Probe Nr. 1 wurde klassisch phasenrein hergestellt und kalziniert, um alle Fehlstellen thermisch auszuheilen. Die restlichen analysierten Proben zeigen Produkte aus dem beschriebenen Verfahren, das eine erhöhte Anzahl von Defekten hervorruft. In Summe ergibt sich dadurch eine Verschiebung der Bande für die Co-O-Schwingung (Summenparameter). Je kleiner die Peakposition, desto mehr Defekte liegen vor. Dies wurde auch mittels PXRD und Rietvelt-Analyse für Probe 1 und 5 nachgewiesen. Probe 5 zeigt die höchste Anzahl an Defekten. Probe Nummer 4 ist das Ausgangsmaterial.

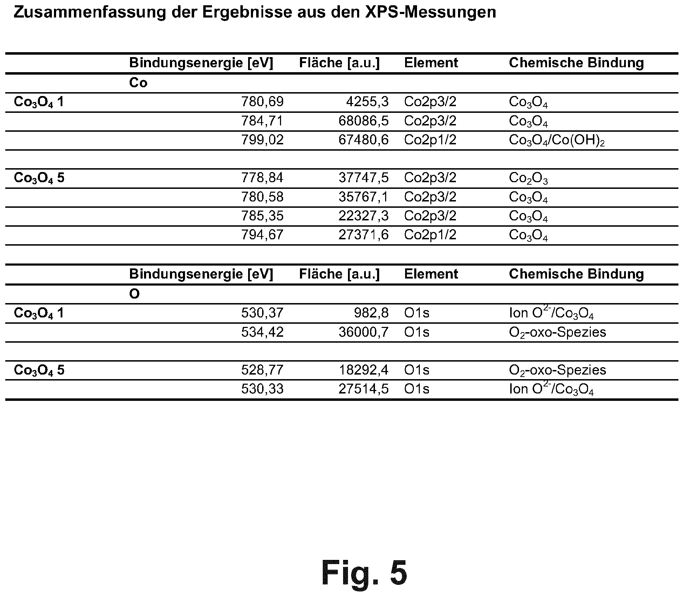

Die Proben 1 und 5 wurden einer Röntgenphotoelektronenspektroskopie (XPS) unterzogen. Die Ergebnisse sind in einer dritten Tabelle in Fig. 5 auszugsweise und nach den Elementen Kobalt und Sauerstoff (atomar) getrennt wiedergegeben.

In der Fig. 6 sind die Spektren der XPS-Messungen der Proben 1 (gestrichelte Linie) und 5 (durchgehende Linie) als Zählraten (Zählung je Sekunde = counts / second = c/s) über der jeweiligen Bindungsenergie in Elektronenvolt (eV) aufgetragen. In einem Bereich der Bindungsenergie von etwa 800 bis 1200 eV wurden für die mittels des erfindungsgemäßen Verfahrens hergestellten Kobalt-Spinelle der Probe 5 durchgehend höhere Zählraten festgestellt, als dies für die mittels Verfahren gemäß dem Stand der Technik hergestellten Partikel der Probe 1 der Fall ist.

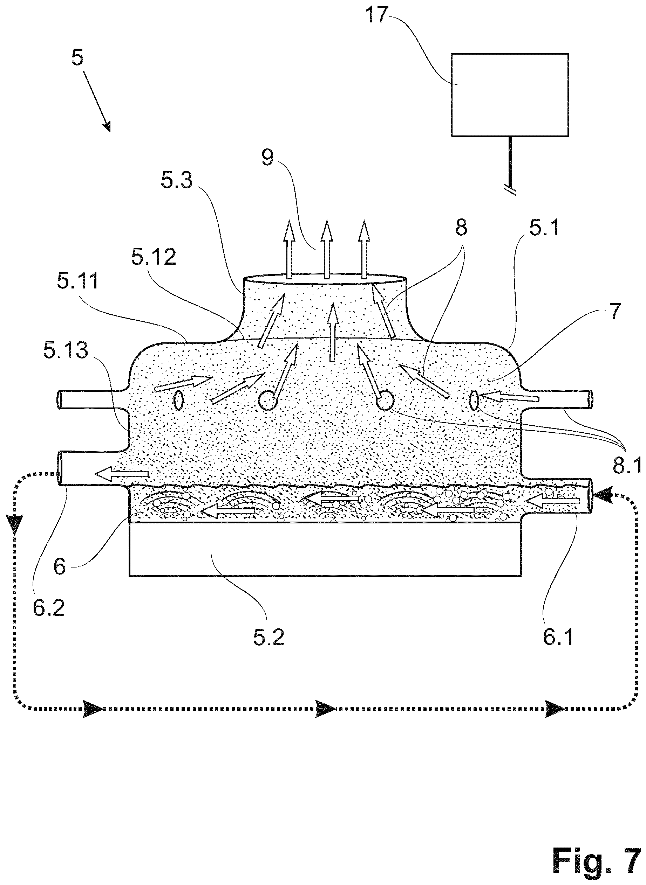

Die Ausführung der Vernebelungseinheit 5 als Ultraschallvernebler ist in Fig. 7 nochmals detaillierter gezeigt. Über dem Vernebler 5.2, der als Ultraschallvernebler ausgebildet ist, ist der Vorratsbehälter 5.1 angeordnet. In einer nach oben weisenden oberen Wand 5.11 des Vorratsbehälters 5.1 ist eine Auslassöffnung 5.12 vorhanden. In einer Seitenwand 5.13 des Vorratsbehälters 5.1 mündet eine Stoffgemischzuleitung 6.1 in den Vorratsbehälter 5.1 ein, über die das Stoffgemisch 6 dem Vorratsbehälter 5.1 zuführbar ist. Die Stoffgemischzuleitung 6.1 ist so tief angeordnet, dass das Stoffgemisch 1 unterhalb eines sich einstellenden Spiegels (Oberfläche) des Stoffgemischs 6 eingeleitet wird. In einer anderen Seitenwand 5.13 ist eine Ablaufleitung 6.2 vorhanden, deren Unterrand auf Höhe des Spiegels des Stoffgemischs 6 liegt und die als Überlauf fungiert. Auf diese Weise wird ein gleichbleibender Füllstand des Stoffgemischs 6 gewährleistet. Durch die Ablaufleitung 6.2 aus dem Vorratsbehälter 5.1 austretendes Stoffgemisch 6 wird über eine Pumpe und eine Umlaufleitung (beide nicht gezeigt) wieder zur Stoffgemischzuleitung 6.1 gefördert. Oberhalb der Stoffgemischzuleitung 6.1 sind mehrere Trägergasstromzuführungen 8.1 (sechs gezeigt) angeordnet, die ebenfalls in den Vorratsbehälter 5.1 münden. Der Vernebler 5.2 kann einen oder mehrere Ultraschallgeneratoren aufweisen.

In weiteren Ausführungen der Vernebelungseinheit 5 kann ein Füllstand auch durch Sensoren überwacht und eine Zufuhr des Stoffgemischs 6 über die Stoffgemischzuleitung 6.1 geregelt sein.

Befindet sich das Stoffgemisch 6 in dem Vorratsbehälter 5.1 und ist der Vernebler 5.2 eingeschaltet, werden durch den Vernebler 5.2 Ultraschallwellen (angedeutet dargestellt) erzeugt, in das Stoffgemisch 6 eingeleitet und das Stoffgemisch 6 wenigstens anteilig in den Nebel 7 überführt. Der Nebel 7 enthält Tropfen und Tröpfchen des Stoffgemischs 6 in unterschiedlichen Größen (Durchmessern, schematisch durch eine Punktierung dargestellt), wobei im oberen Bereich des Vorratsbehälters 5.1 der Nebel 7 kleinere Tröpfchen und keine Tropfen als in dem unteren Bereich des Vorratsbehälters 5.1 vorhanden sind. Der Nebel 7 enthält einen nach unten zunehmenden Anteil an größeren Tröpfchen und Tropfen. Durch die Trägergasstromzuführungen 8.1 ist der Trägergasstrom 8 in den Vorratsbehälter 5.1 in den oberen Bereich des Vorratsbehälters 5.1 gerichtet. Durch Wirkung des Trägergasstroms 8 werden die Anteile des Nebels 7 mit den kleinen Tröpfchen in Richtung der Auslassöffnung 5.12 transportiert und zusammen mit dem Trägergasstrom 8 als Eduktstrom 9 aus der Vernebelungseinheit 5 ausgeleitet und über die Eduktstromzuleitung 5.3 abtransportiert.

Mittels der Steuerung 17 sind sowohl der Vernebler 5.2 (insbesondere die Intensität und die Frequenz(-en) der Ultraschallwellen) als auch Pumpen (nicht gezeigt) zur Erzeugung des Trägergasstroms 8 und der Zufuhr des Stoffgemischs 6 in den Vorratsbehälter 5.1 ansteuerbar, sodass die Zusammensetzung des Nebels 7 und dessen Verteilung innerhalb des Vorratsbehälters 5.1 geregelt werden können. Günstig an dieser Ausführung der Vernebelungseinheit 5 ist, dass lediglich Nebel 7 mit kleinen Tröpfchen als Bestandteil des Eduktstroms 9 ausgeleitet und dem erfindungsgemäßen Verfahren bereitgestellt wird.

In weiteren Ausführungen der Vernebelungseinheit 5 kann der Eduktstrom 9 auch zusätzlich oder gänzlich durch einen Unterdruck (Prinzip der Strahlpumpe) in dem Reaktorraum 2 (siehe Fig. 1) angesaugt werden. Die Trägergasstromzuführungen 8.1 dienen dann weitgehend als Belüftungsöffnungen für den Vorratsbehälter 5.1.

### Bezugszeichenliste

- 1: Reaktor
- 2: Reaktorraum
- 3: Reaktionsstrecke
- 3.1: Streckenanfang
- 3.2: Streckenende
- 4: Längsachse
- 5: Vernebelungseinheit
- 5.1: Vorratsbehälter
- 5.11: obere Wand
- 5.12: Auslassöffnung
- 5.13: Seitenwand (des Vorratsbehälters 5.1)
- 5.2: Vernebler
- 5.3: Eduktstromzuleitung
- 6: Stoffgemisch
- 6.1: Stoffgemischzuleitung
- 6.2: Ablaufleitung
- 7: Nebel
- 8: Trägergasstrom
- 8.1: Trägergasstromzuführung
- 9: Eduktstrom
- 10: Lanze
- 10.1: Auslassöffnung
- 10.2: Zustelleinrichtung
- 11: Einstecklänge
- 12: Heißgaszuführung
- 13: Heißgasstrom
- 14: Lüfter
- 15: Kühlstromzuführung
- 16: Kühlstrom
- 17: Steuerung
- 18: Heizung
- 19: Partikel
- 20: Abscheider
- 21: Reaktionsstrom
- 22: Sensor
- 23: Kühleinrichtung (der Lanze 10)
- 23.1: Kühlleitungen
- Δ3: Betrag

## Patentansprüche

1. Verfahren zur thermischen Umsetzung eines Stoffgemisches (6) in einem Reaktorraum (2) zu Partikeln (19) mit den Schritten:
- Bereitstellen des Stoffgemisches (6) in Form einer Lösung, einer Suspension, einer Dispersion oder einer Emulsion mindestens eines Ausgangsstoffs der Partikel (19),
- Erzeugen eines Nebels (7) aus Tröpfchen des Stoffgemisches (6) in mindestens einem Trägergas,
- Einleiten des Nebels (7) mittels eines Trägergasstromes (8) in den Reaktorraum (2) als einen Eduktstrom (9),
- Einleiten eines Heißgasstromes (13) in den Reaktorraum (2) und Mischen von Eduktstrom (9) und Heißgasstrom (13) zum Erhitzen des Eduktstroms (9) mindestens auf eine zur thermischen Umsetzung des mindestens einen Ausgangsstoffs erforderliche Starttemperatur,
- Durchleiten des Eduktstroms (9) und des Heißgasstroms (13) als einen eine mittlere Strömungsgeschwindigkeit aufweisenden Reaktionsstrom (21) entlang einer durch den Reaktorraum (2) gerichteten Reaktionsstrecke (3) mit einem Streckenanfang (3.1) und einem Streckenende (3.2), wobei der Streckenanfang (3.1) der Reaktionsstrecke (3) durch den Ort des Mischens des Heißgasstroms (13) mit dem Eduktstrom (9) gegeben ist,
- Zuführen eines Kühlstroms (16) in den Reaktorraum (2) und Mischen des Kühlstroms (16) mit dem Reaktionsstrom (21) zum Abkühlen des Reaktionsstroms (21) innerhalb einer Abkühldauer auf eine Zieltemperatur, wobei das Streckenende (3.2) der Reaktionsstrecke (3) durch den Ort gegeben ist, an dem die Zieltemperatur erreicht wird, und
- Sammeln der hergestellten Partikel (19),
**dadurch gekennzeichnet, dass**
- der Heißgasstrom (13) in einer der Zuführung des Heißgasstroms (13) zum Streckenanfang (3.1) dienenden Heißgaszuführung (12) indirekt erhitzt wird,
- der Reaktionsstrom (21) kontinuierlich entlang der Reaktionsstrecke (3) geleitet wird und
- die mittlere Strömungsgeschwindigkeit so eingestellt ist, dass der Reaktionsstrom (21) innerhalb einer vorbestimmten Reaktionsdauer, die längstens mit 2 Sekunden gewählt wird, entlang der Reaktionsstrecke (3) geleitet wird, sodass das Erhitzen des Eduktstroms (9), die thermische Umsetzung des mindestens einen Ausgangsstoffs zu den Partikeln (19) und die Abkühlung der Partikel (19) auf die Zieltemperatur innerhalb der Reaktionsdauer erfolgen.

2. Verfahren nach Anspruch 1, **dadurch gekennzeichnet, dass** als Zieltemperatur eine Temperatur gewählt wird, die unterhalb der Starttemperatur und unterhalb einer verbindungsspezifischen Temperatur liegt, bei der eine Veränderung von Oxidationszuständen einzelner Atome und Moleküle in der Gitterstruktur der Partikel (19) erfolgt.

3. Verfahren nach Anspruch 2, **dadurch gekennzeichnet, dass** die Zieltemperatur unterhalb der Taupunkttemperatur eines in dem Reaktionsstrom (21) enthaltenen Lösungsmittels liegt, so dass das Lösungsmittel kondensiert.

4. Verfahren nach einem der Ansprüche 2 oder 3, **dadurch gekennzeichnet, dass** die Abkühldauer längstens 2 Sekunden beträgt.

5. Verfahren nach Anspruch 4, **dadurch gekennzeichnet, dass** der Reaktionsstrom (21) über die gesamte Reaktionsdauer eine Reaktionstemperatur aufweist, die gleich oder oberhalb der Starttemperatur liegt, wobei die Starttemperatur gleich oder größer 150°C ist.

6. Verfahren nach Anspruch 5, **dadurch gekennzeichnet, dass** eine Temperatur des Heißgasstroms (13) so gewählt und eingestellt wird, dass dieser am Streckenanfang (3.1) eine Temperatur aufweist, aus der in Folge der Mischung des Eduktstroms (9) und des Heißgasstroms (13) und unter Berücksichtigung der Wärmeverluste durch Wärmeleitung und Wärmeübertragung mindestens die Starttemperatur resultiert.

7. Verfahren nach Anspruch 5 oder 6, **dadurch gekennzeichnet, dass**
der Heißgasstrom (13) durch eine gesteuerte Erwärmung außenliegender Bereiche der Heißgaszuführung (12) mittels eines Heizmediums und / oder innenliegender und / oder außenliegender Bereiche der Heißgaszuführung (12) durch eine gesteuerte Bestrahlung mit einer elektromagnetischen Strahlung oder mittels Ultraschall oder mittels eines Ohmschen Heizers erhitzt wird.

8. Verfahren nach einem der vorhergehenden Ansprüche, **dadurch gekennzeichnet,**
**dass**
das Stoffgemisch (6) neben dem mindestens einen Ausgangsstoff mindestens eine Substanz enthält, die in dem Reaktionsstrom (21) in einer exothermen chemischen Reaktion umsetzbar ist.

9. Verfahren nach einem der vorhergehenden Ansprüche, **dadurch gekennzeichnet,**
**dass**
eine Länge der Reaktionsstrecke (3) durch eine gesteuerte Festlegung des Ortes des Streckenanfangs (3.1) eingestellt wird, indem durch Einstellung der räumlichen Ausrichtung einer Mündung der Heißgaszuführung (12) die räumliche Position des Streckenanfangs (3.1) festgelegt wird.

10. Verfahren nach einem der vorhergehenden Ansprüche, **dadurch gekennzeichnet,**
**dass**
der Reaktionsstrom (21) mindestens über die Reaktionsstrecke (3) eine mittlere Strömungsgeschwindigkeit von mindestens 1 m/s aufweist.

11. Partikel (19) hergestellt mittels eines Verfahrens nach einem der Ansprüche 1 bis 10, **dadurch gekennzeichnet, dass**
die Partikel (19) einen mittleren Durchmesser d₉₅ von ≤ 200 µm aufweisen.

12. Partikel (19) nach Anspruch 11, **dadurch gekennzeichnet, dass** die Partikel (19) eine um mindestens 5% höhere Defektrate in ihrer Gitterstruktur aufweisen als klassisch hergestellte Partikel der gleichen Materialien und mengenmäßigen Zusammensetzungen, wobei die Defektraten mittels der Pulverröntgendiffraktometrie und anschließender Rietvelt-Analyse bestimmt sind.

## Claims

1. Method for thermal conversion of a substance mixture (6) into particles (19) in a reactor chamber (2), comprising the steps:
- providing the substance mixture (6) in the form of a solution, a suspension, a dispersion or an emulsion of at least one starting substance of the particles (19),
- generating a fog (7) of droplets of the substance mixture (6) in at least one carrier gas,
- introducing the fog (7) into the reactor chamber (2) as an educt current (9) by means of a carrier gas current (8),
- introducing a hot gas current (13) into the reactor chamber (2) and mixing the educt current (9) and the hot gas current (13) for heating the educt current (9) to a starting temperature which is at least necessary for the thermal conversion of the at least one starting substance,
- guiding the educt current (9) and the hot gas current (13), as a reaction current (21) having an average current velocity, along a reaction section (3) directed through the reactor chamber (2), the reaction section (3) having a beginning of the section (3.1) and an end of the section (3.2), wherein the beginning of the section (3.1) of the reaction section (3) is given by the location of the mixing of the hot gas current (13) with the educt current (9),
- supplying the reactor chamber (2) with a cooling current (16) and mixing the cooling current (16) with the reaction current (21) for cooling the reaction current (21) to a target temperature within a cooling duration, wherein the end of the section (3.2) of the reaction section (3) is given by the location at which the target temperature is reached, and
- collecting the produced particles (19),
**characterized in that**
- the hot gas current (13) is indirectly heated in a hot gas supply (12) serving to supply the hot gas current (13) to the beginning of the section (3.1),
- the reaction current (21) is continuously guided along the reaction section (3) and
- the average current velocity is adjusted in such a way that the reaction current (21) is guided along the reaction section (3) within a predetermined reaction duration, which is selected to be at most 2 seconds, so that the heating of the educt current (9), the thermal conversion of the at least one starting substance into the particles (19) and the cooling of the particles (19) to the target temperature are carried out within the reaction duration.

2. Method according to claim 1, **characterized in that** a temperature is selected as target temperature which is below the starting temperature and below a connection-specific temperature, at which oxidation conditions of single atoms and molecules in the grid structure of the particles (19) are changed.

3. Method according to claim 2, **characterized in that** the target temperature is below the dew-point temperature of a solvent contained in the reaction current (21), so that the solvent condenses.

4. Method according to one of claims 2 or 3, **characterized in that** the cooling duration is at most 2 seconds.

5. Method according to claim 4, **characterized in that** over the total reaction duration the reaction current (21) has a reaction temperature which is equal to or above the starting temperature, wherein the starting temperature is equal to or higher than 150°C.

6. Method according to claim 5, **characterized in that** a temperature of the hot gas current (13) is selected and adjusted in such a way that at the beginning of the section (3.1) the hot gas current (13) has a temperature from which results at least the starting temperature as a consequence of the mixing of the educt current (9) and the hot gas current (13) and by taking into account the heat losses resulting from heat conduction and heat transfer.

7. Method according to claim 5 or 6, **characterized in that** the hot gas current (13) is heated by a controlled heating of external areas of the hot gas supply (12) by means of a heating medium and / or internal and / or external areas of the hot gas supply (12) by a controlled irradiation with an electromagnetic radiation or by means of ultrasound or by means of an ohmic heater.

8. Method according to one of the preceding claims, **characterized in that**, apart from the at least one starting substance, the substance mixture (6) contains at least one substance which can be converted in the reaction current (21) in an exothermic chemical reaction.

9. Method according to one of the preceding claims, **characterized in that** a length of the reaction section (3) is adjusted by controlled definition of the location of the beginning of the section (3.1), by defining the spatial position of the beginning of the section (3.1) by adjusting the spatial orientation of an outlet of the hot gas supply (12).

10. Method according to one of the preceding claims, **characterized in that** the reaction current (21) has an average current velocity of at least 1 m/s at least over the reaction section (3).

11. Particles (19), produced by means of a method according to one of claims 1 to 10, **characterized in that** the particles (19) have an average diameter d₉₅ of ≤ 200 µm.

12. Particles (19) according to claim 11, **characterized in that** the particles (19) have a defect rate in their grid structure which is by at least 5 % higher than the defect rate of classically produced particles of the same materials and quantitative compositions, wherein the defect rates are determined by means of powder x-ray diffractometry and subsequent Rietveld analysis.

## Revendications

1. Procédé destiné à la conversion thermique d'un mélange de substances (6) en particules (19) dans un compartiment de réacteur (2), comprenant les étapes:
- fournir le mélange de substances (6) sous la forme de solution, de suspension, de dispersion ou d'émulsion d'au moins une substance de départ des particules (19),
- générer un brouillard (7) de gouttelettes du mélange de substances (6) dans au moins un gaz porteur,
- introduire le brouillard (7) dans le compartiment de réacteur (2) comme courant d'éduit (9) au moyen d'un courant de gaz porteur (8),
- introduire un courant de gaz chaud (13) dans le compartiment de réacteur (2) et mélanger le courant d'éduit (9) et le courant de gaz chaud (13) pour chauffer le courant d'éduit (9) à une température de départ au moins nécessaire pour la conversion thermique de l'au moins une substance de départ,
- guider le courant d'éduit (9) et le courant de gaz chaud (13), comme un courant de réaction (21) ayant une vitesse moyenne du courant, le long d'une section de réaction (3) dirigée à travers le compartiment de réacteur (2), la section de réaction (3) ayant un début de section (3.1) et une fin de section (3.2), le début de section (3.1) de la section de réaction (3) étant donné par le lieu du mélange du courant de gaz chaud (13) avec le courant d'éduit (9),
- alimenter un courant de refroidissement (16) en le compartiment de réacteur (2) et mélanger le courant de refroidissement (16) avec le courant de réaction (21) pour refroidir le courant de réaction (21) à une température cible pendant une durée de refroidissement, la fin de section (3.2) de la section de réaction (3) étant donnée par le lieu où la température cible est atteinte, et
- collectionner les particules (19) produites,
**caractérisé en ce que**
- le courant de gaz chaud (13) est chauffé de manière indirecte dans une alimentation de gaz chaud (12) servant d'alimenter le courant de gaz chaud (13) en le début de section (3.1),
- le courant de réaction (21) est guidé le long de la section de réaction (3) de manière continue et
- la vitesse moyenne du courant est ajustée de telle manière que le courant de réaction (21) est guidé le long de la section de réaction (3) pendant une durée de réaction prédéterminée, qui est sélectionnée d'être au plus 2 secondes, de façon que le chauffage du courant d'éduit (9), la conversion thermique de l'au moins une substance de départ en les particules (19) et le refroidissement des particules (19) à une température cible sont effectués pendant la durée de réaction.

2. Procédé selon la revendication 1, **caractérisé en ce qu'**une température est sélectionnée comme température cible qui est au-dessous de la température de départ et au-dessous d'une température spécifique de la liaison, à laquelle des conditions d'oxydation d'atomes et molécules individuels dans la structure réticulaire des particules (19) sont changées.

3. Procédé selon la revendication 2, **caractérisé en ce que** la température cible est au-dessous de la température du point de rosée d'un solvant contenu dans le courant de réaction (21), de façon que le solvant se condense.

4. Procédé selon une des revendications 2 ou 3, **caractérisé en ce que** la durée de refroidissement est au plus 2 secondes.

5. Procédé selon la revendication 4, **caractérisé en ce que** pendant la durée de réaction totale le courant de réaction (21) a une température de réaction qui est égale à ou au-dessus de la température de départ, la température de départ étant égale ou supérieure à 150°C.

6. Procédé selon la revendication 5, **caractérisé en ce qu'**une température du courant de gaz chaud (13) est sélectionnée et ajustée de telle manière qu'au début de section (3.1) le courant de gaz chaud (13) a une température dont au moins la température de départ résulte suite au mélange du courant d'éduit (9) et du courant de gaz chaud (13) et en prenant en compte les pertes de chaleur résultant de la conduction thermique et du transfert thermique.

7. Procédé selon la revendication 5 ou 6, **caractérisé en ce que** le courant de gaz chaud (13) est chauffé par réchauffement contrôlé de sections externes de l'alimentation de gaz chaud (12) au moyen d'un milieu chauffant et / ou de sections internes et / ou externes de l'alimentation de gaz chaud (12) par une irradiation contrôlée avec un rayonnement électromagnétique ou au moyen d'ultrason ou au moyen d'un chauffage ohmique.

8. Procédé selon une des revendications précédentes, **caractérisé en ce que**, en plus de l'au moins une substance de départ, le mélange de substances (6) contient au moins une substance qui peut être convertie dans le courant de réaction (21) dans une réaction chimique exothermique.

9. Procédé selon une des revendications précédentes, **caractérisé en ce qu'**une longueur de la section de réaction (3) est ajustée par une définition contrôlée du lieu du début de section (3.1), en définissant la position spatiale du début de section (3.1) en ajustant l'orientation spatiale d'un débouché de l'alimentation de gaz chaud (12).

10. Procédé selon une des revendications précédentes, **caractérisé en ce que** le courant de réaction (21) a une vitesse moyenne du courant d'au moins 1 m/s au moins dans la section de réaction (3).

11. Particules (19), produites au moyen d'un procédé selon une des revendications 1 à 10, **caractérisé en ce que** les particules (19) ont un diamètre moyen d₉₅ de ≤ 200 µm.

12. Particules (19) selon la revendication 11, **caractérisé en ce que** les particules (19) ont un taux de défauts dans leur structure réticulaire qui est supérieur d'au moins 5 % au taux de défauts de particules classiquement produites des mêmes matériaux et compositions quantitatives, les taux de défauts étant déterminés au moyen de la diffractométrie aux rayons X par poudre et puis l'analyse de Rietveld.
